# EUROPÄISCHE PATENTSCHRIFT

(11) **EP 1 119 735 B1**
(45) Veröffentlichungstag und Bekanntmachung des Hinweises auf die Patenterteilung: **02.02.2005**
(21) Anmeldenummer: 00963902.2
(22) Anmeldetag: 09.08.2000
(51) Int. Cl.: F28B 1/06

(54) **ANLAGE ZUR KONDENSATION VON DAMPF**
INSTALLATION FOR STEAM CONDENSATION
INSTALLATION DE CONDENSATION DE VAPEUR

(30) Priorität: 10.08.1999 DE 19937800
(43) Veröffentlichungstag der Anmeldung: 01.08.2001
(73) Patentinhaber: GEA Energietechnik GmbH, 44809 Bochum (DE)
(72) Erfinder: BENSING, Heinz-Dieter, 44659 Herne (DE); KORISCHEM, Benedict, 40489 Düsseldorf (DE)
(74) Vertreter: Bockermann, Rolf, Dipl.-Ing.
(86) Internationale Anmeldenummer: PCT/DE2000/002714
(87) Internationale Veröffentlichungsnummer: WO 2001/011300

(56) Entgegenhaltungen:
- EP-A- 0 170 753
- DE-A- 3 414 589
- DE-B- 1 228 640
- US-A- 5 448 830

## Beschreibung

Als bevorzugte Anordnung von Rohrbündeln in luftgekühlten Kondensationsanlagen hat sich in der Praxis eine Bauweise in A- bzw. spitzdachförmiger Konfiguration sowohl von der Verfahrens als auch von der Kostenseite her herausgestellt.

Bei dieser Anordnung werden die Rohrbündel zumeist unter einem Winkel von ca. 60° auf der oberen Plattform einer Unterkonstruktion in Form eines Stahlgerüsts montiert. Der Abstand der Plattform vom Erdboden ergibt sich aus der jeweils erforderlichen anzusaugenden Menge an Kühlluft. Die oberen Enden der Rohrbündel werden fluidübertragend an eine gemeinsame Dampfverteilleitung angeschlossen. Der zu kondensierende Dampf wird über die Dampfverteilleitung in die Rohrbündel geleitet und in den zumeist außenseitig berippten Rohren der Rohrbündel kondensiert, wobei zur Verstärkung des Luftzugs unterhalb einer bestimmten Anzahl von Rohrbündeln etwa in der Ebene der Plattform ein Lüfter installiert ist. Die unteren Enden der Rohrbündel sind je nach ihrer Beaufschlagungsart an Kondensatsammelleitungen bzw. Dephlegmatorleitungen angeschlossen. Das Umfeld im Bereich eines Lüfters wird auch als Lüfterfeld bezeichnet.

Die Rohrbündel mit einer Breite von häufig etwa 2,5 Metern und mehreren Metern Neigungslänge sind in der Regel nicht selbsttragend ausgestaltet. Dadurch ist es erforderlich, jedem Rohrbündel einen Tragrahmen zuzuordnen. Ein solcher Tragrahmen besteht meistens aus zwei schrägen Stielen, die durch Querriegel untereinander und mit dem gegenüberliegenden Tragrahmen versteift sind. Die Tragrahmen müssen so stabil ausgelegt sein, dass sie zusätzlich zu den Gewichten der Rohrbündel auch noch die Gewichte, jedenfalls anteilsmäßig, der Dampfverteilleitung und der Kondensatsammelleitungen sowie die Kräfte aus Wind, Schnee oder Erdbeben aufnehmen können. Hinzu kommen zumeist auch noch Kräfte aus den unterhalb der Dampfverteilleitung befindlichen Kranbahnen, die für die Montage und Demontage der Lüfter (Motor, Getriebe) vorgesehen sind.

Da die Rohrbündel unterschiedlichen thermischen Beanspruchungen ausgesetzt sind, muss, um eine freie Wärmeausdehnung der Rohrbündel sowohl in ihrer Längs- als auch in ihrer Querrichtung zu gewährleisten, die größte statische Last aus dem Bündeleigengewicht über zusätzliche Träger, und zwar an statisch ungünstiger Stelle, nämlich im Firstbereich bzw. im etwa unteren Drittel der Tragrahmen eingeleitet werden.

Resultierend aus der Summe der vorstehend angeführten Faktoren ergeben sich somit vergleichsweise große Profilabmessungen mit einem entsprechend hohen Gewicht.

Der Erfindung liegt ausgehend vom Stand der Technik die Aufgabe zugrunde, eine Anlage zur Kondensation von Dampf zu schaffen, die wesentlich leichter ist und mit vereinfachten Mitteln montiert werden kann.

Die Lösung dieser Aufgabe wird nach der Erfindung in den Merkmalen des Anspruchs 1 gesehen.

Kern der Erfindung bildet der Sachverhalt, dass nunmehr die bevorzugt einen rechteckigen Querschnitt aufweisenden Rohrbündel selbsttragend ausgebildet sind, so dass sie nicht nur in ihrer reinen Form als Wärmetauscher eingesetzt, sondern gleichzeitig zur Abtragung statischer Lasten herangezogen werden können. Die selbsttragende Funktion der Rohrbündel ist derart, dass sie nicht nur sich selbst tragen, sondern auch das Gewicht der Dampfverteilleitung sowie der Kondensatsammelleitungen (Dephlegmatorleitungen) und die Kräfte aus Wind, Schnee sowie Erdbeben und ggf. auch Kranbahnenlasten aufnehmen können.

Ferner ist es von Bedeutung, dass gegenüberliegende Rohrbündel über ihre oberen Rohrböden begrenzt schwenkgelenkig aneinander abgestützt und die Kondensatsammelleitungen unterhalb der unteren Rohrböden an diese angesetzt sowie parallel zur Mittellängsebene der Anlage relativ verlagerbar auf der Unterkonstruktion positioniert sind.

Aufgrund der selbsttragenden Ausführung der Rohrbündel können unterstützende und damit teure Tragrahmen für die Rohrbündel vollkommen entfallen. Verfahrensbedingt sind nur noch die vergleichsweise leichten Trennwände stirnseitig eines Lüfterfelds vorzusehen. Interne Berechnungen haben ergeben, dass somit das von der Unterkonstruktion zu tragende Gesamtgewicht pro Lüfterfeld um ca. 65% gesenkt werden kann.

Da nunmehr die Kondensatsammelleitungen direkt unterhalb der Rohrbündel angeordnet sind, wird bei gleicher Leistung das Systemmaß der Anlage kleiner mit dem Ergebnis, dass sich auch für die Unterkonstruktion geringere Abmessungen und Gewichte ergeben.

Durch die spezielle Zuordnung der Kondensatsammelleitungen zu den Rohrbündeln kann darüber hinaus die Dampfverteilleitung und folglich die gesamte Anlagenhöhe um einen erheblichen Betrag auf ein tieferes Niveau verlagert werden. Da häufig bei einem Anlagenbetreiber Höhenbeschränkungen vorhanden sind, wird mit der Erfindung gerade hier eine größere Variationsbreite erreicht.

Aufgrund der niedrigeren Anlagenhöhe sowie der geringeren Breite der Anlage kann auch die die Anlage umgebende Windwand niedriger gehalten und die Länge der Dampfverteilleitung vor dem firstseitigen Längenbereich gekürzt werden. Als Folge wird das Gewicht der genannten Bauteile und die Trapezblechfläche für die Windwandverkleidung verringert.

Dank der niedrigeren Bauhöhe verringert sich darüber hinaus die Wind- und Erdbebenbelastung für die gesamte Anlage. Dies ist mit kleineren Bauteilabmessungen und geringeren Stahlbaugewichten der gesamten Anlage verbunden.

Im Hinblick darauf, dass die Tragrahmen für die Rohrbündel entfallen, wird die Anströmung der Rohrbündel mit Kühlluft nicht mehr beeinträchtigt. Der Wirkungsgrad der Anlage wird entsprechend verbessert.

Die direkte Zuordnung der Kondensatsammelleitung unterhalb der Rohrbündel vermeidet die bislang noch notwendige Verbindung zwischen den unteren Rohrböden und den gesonderten Kondensatsammelleitungen. Auch sind hiermit ein entsprechendes Mindergewicht sowie eine Verringerung des Schweißaufwands bei der Herstellung verbunden.

Die Kondensatsammelleitungen übernehmen ferner die Abdichtung der Rohrbündel unterhalb der unteren Rohrböden, so dass die bislang zur Vermeidung von Rezirkulation von Kühlluft erforderlichen kostenintensiven Dichtbleche unterhalb der Rohrbündel entfallen können.

Eine weitere vorteilhafte Eigenschaft besteht darin, dass die Rohrbündel zusammen mit den Kondensatsammelleitungen bereits werkstattseitig vormontiert werden können. Dadurch werden kostenintensive Montageschweißnähte und bauseitige Anpassarbeiten im Bereich der unteren Rohrböden der Rohrbündel erheblich reduziert.

Ein anderer wesentlicher Vorteil der Erfindung ist die begrenzt schwenkgelenkige Abstützung der einander gegenüberliegenden Rohrbündel über ihre oberen Rohrböden. Dies führt nunmehr dazu, dass der Konstruktionsaufwand für das eventuelle Ändern einer Bündelneigung, z.B. aus verfahrenstechnischen Gründen, relativ gering ist und schnell sowie kostengünstig durchgeführt werden kann. Während bei der zum Stand der Technik zählenden Anlage die gesamte Dachrahmengeometrie geändert werden müsste, erlaubt die Erfindung eine Änderung der Bündelneigung durch einfaches Anpassen der Positionierung der Kondensatsammelleitungen an die Unterkonstruktion sowie der Art der gegenseitigen Abstützung der Rohrbündel über ihre oberen Rohrböden.

Die Verbindung der oberen Rohrböden der Rohrbündel kann entsprechend Anspruch 2 über Winkellaschen erfolgen. Diese Winkellaschen sind in Abständen in Längsrichtung der Anlage vorgesehen. Sie können mit den Rohrböden verschraubt oder verschweißt sein. Eine größere Änderung der Bündelneigung erfordert lediglich einen Austausch dieser Winkellaschen. Dennoch erlauben die Winkellaschen eine begrenzte, meist thermisch bedingte Schwenkbeweglichkeit.

Nach Anspruch 3 ist es ferner möglich, dass die oberen Rohrböden durch diese über- und untergreifende, miteinander verschraubte Klemmlaschen gekoppelt sind. Auch in diesem Fall ist es nur erforderlich, die Verschraubungen zu lösen, um einer geänderten Bündelneigung schnell und sicher gerecht zu werden.

Wenn nach Anspruch 4 die oberen Rohrböden über Gelenklaschen miteinander verbunden sind, ist bei einer Änderung der Bündelneigung überhaupt kein Austausch notwendig. Diese Gelenklaschen sind jeweils über Tragbleche mit den Rohrböden verschraubt oder verschweißt.

Schließlich besteht eine Verbindung der oberen Rohrböden entsprechend den Merkmalen des Anspruchs 5 darin, dass die Rohrböden durch unter diesen befestigte sowie miteinander verbundene, mittels Stege ausgesteifte U-förmige Profile aneinander gekoppelt sind. Die U-Profile können sowohl mit den Rohrböden als auch untereinander verschraubt oder verschweißt sein. Sie dienen häufig der Fixierung einer Tragschiene für eine Kranbahn.

Eine vorteilhafte Anbindung der Dampfverteilleitung an die oberen Rohrböden wird in den Merkmalen des Anspruchs 6 erblickt. Danach ist die einen runden Querschnitt aufweisende Dampfverteilleitung im unteren Umfangsbereich offen ausgebildet. Mit anderen Worten ausgedrückt ist ein Wandbereich der Dampfverteilleitung entfernt worden. Neben dem offenen Umfangsbereich sind parallele Distanzstege angeschweißt, die andererseits an den oberen Rohrböden, insbesondere an den einander abgewandten Längskanten festgeschweißt sind. Diese Gestaltung erlaubt es ebenfalls, dass bei Bündelneigungen alle Bauteile den Schwenkbewegungen folgen können.

Eine bevorzugte Ausgestaltung der Kondensatsammelleitungen besteht im Anspruch 7. Sie weisen danach einen rechteckigen Querschnitt auf und sie werden durch die unteren Rohrböden der Rohrbündel, aus Bodenblechen und aus Seitenblechen gebildet. Entsprechend der Anzahl der nebeneinander liegenden Rohrbündel können diese Kondensatsammelleitungen problemlos aneinandergeschweißt werden. Sowohl die Tragfähigkeit der Kondensatsammelleitungen als auch die Aufrechterhaltung des Querschnitts wird durch außenseitige Vertikalrippen gewährleistet. Dies kann aber auch durch eine dickere Wandung der Seitenbleche erzielt werden.

Statt eines rechteckigen Querschnitts können die Kondensatsammelleitungen gemäß den Merkmalen des Anspruchs 8 aber auch einen dreieckigen Querschnitt aufweisen. In diesem Fall sind die Kondensatsammelleitungen außenseitig ebenfalls durch Vertikalrippen versteift. Der Querschnitt verschmälert sich von den Rohrbündeln ausgehend in Richtung zur Unterkonstruktion.

Besitzen entsprechend Anspruch 9 die Kondensatsammelleitungen einen runden Querschnitt, so sind sie rohrbündelseitig offen ausgebildet und durch neben den offenen Umfangsbereichen angeordnete parallele Längsstege zu den unteren Rohrböden distanziert. Bevorzugt sind alle Teile miteinander verschweißt. Sowohl die Kondensatsammelleitungen als auch die Längsstege sind außenseitig durch Rippen versteift.

Eine vorteilhafte Ausführungsform für die relativ verlagerbare Positionierung der Kondensatsammelleitungen auf der Unterkonstruktion besteht in den Merkmalen des Anspruchs 10. Danach sind die Kondensatsammelleitungen direkt oder über Stützfüße an auf der Unterkonstruktion befestigten Gleitschienen zwangsgeführt. Auf diese Weise können die Rohrbündel allen thermisch bedingten Längenund Breitenänderungen zwängungsfrei folgen.

In diesem Zusammenhang wird gemäß Anspruch 11 eine vorteilhafte Weiterbildung darin erblickt, dass die Stützfüße über hochglanzpolierte Edelstahlwinkel an den bereichsweise mit Gleitschichten aus Polytetrafluorethylen versehenen, einen rechteckigen Querschnitt aufweisenden Gleitschienen zwangsgeführt sind. Die Edelstahlwinkel sind direkt unterhalb der Kondensatsammelleitungen oder an den unteren Enden der Stützfüße angeordnet. Sie haben einen vertikalen und einen horizontalen Schenkel, mit dem sie die rechteckigen Gleitschienen von der vertikalen Mittellängsebene der Anlage her übergreifen. Die Gleitschichten aus Polytetrafluorethylen können punktuell an den den Schenkeln des Edelstahlwinkels gegenüberliegenden Flächen vorgesehen sein. Denkbar sind aber auch streifenförmige Gleitschichten.

Die Schraubverbindungen gemäß Anspruch 12 dienen als Abhebesicherungen. Schrauben können auch zur Fixierung der Gleitschienen an der Unterkonstruktion herangezogen werden.

Eine andere gleitende Abstützung der Kondensatsammelleitungen sehen die Merkmale des Anspruchs 13 vor. Danach sind auf der Unterkonstruktion nach oben offene U-förmige Gleitschienen lösbar oder unlösbar befestigt. Am Boden und an den inneren Seiten der Gleitschienen sind ebenfalls bereichsweise Gleitschichten aus Polytetrafluorethylen vorgesehen. Unterhalb der Kondensatsammelleitungen oder der Stützfüße sind dann Führungskonsolen, insbesondere aus Edelstahl, lösbar oder unlösbar befestigt. Da die Führungskonsolen in die Gleitschienen fassen, ist auch hier eine einwandfreie Abstützung der Rohrbündel im Bereich der Kondensatsammelleitungen gewährleistet.

Nach Anspruch 14 ist auch eine rollende Lagerung der Kondensatsammelleitungen auf der Unterkonstruktion denkbar. Diese Lagerung kann direkt oder über Stützfüße erfolgen.

Eine Ausführungsform sieht gemäß Anspruch 15 vor, dass die Kondensatsammelleitungen über an den Stützfüßen vorgesehene Rollen auf der Unterkonstruktion abwälzen. Hierbei kann es zweckmäßig sein, dass zum Abfangen der Spreizkräfte die Rollen sich zur Außenseite der Anlage hin an Anschlagleisten abstützen.

Letztlich sieht eine Ausführungsform der Erfindung entsprechend den Merkmalen des Anspruchs 16 noch vor, dass die Kondensatsammelleitungen über Vielkugellager an der Unterkonstruktion abgestützt sind. Diese Vielkugellager können jeweils umfangsseitig des Vertikalstegs einer T-förmigen Basisschiene vorgesehen sein. Sie werden von den vertikalen Schenkeln einer U-förmigen Gleitschiene übergriffen, die direkt oder indirekt mit einer Kondensatsammelleitung verbunden ist.

Es ist nach der Erfindung vorteilhaft, wenn bei im Querschnitt runden Kondensatsammelleitungen die Stützfüße durch sich in Richtung der Kondensatsammelleitungen erstreckende U-Profile gebildet sind. Die U-Profile liegen dann mit ihren Schenkeln umfangsseitig der Kondensatsammelleitungen an. Auf diese Weise kann je nach der Neigung der Rohrbündel eine exakte Lageeinstellung der Kondensatsammelleitungen zu den Stützfüßen bewirkt werden.

Die Erfindung ist nachfolgend anhand von in den Zeichnungen dargestellten Ausführungsbeispielen näher erläutert.
Es zeigen:
- Figur 1: In schematischer Perspektive, teilweise im Schnitt eine Anlage zur Kondensation von Dampf;
- Figur 2: in vergrößerter Darstellung, teilweise im Schnitt zwei sich firstseitig aneinander abstützende Rohrbündel der Anlage der Figur 1;
- Figur 3: in vergrößerter Darstellung eine Teil-Stirnansicht auf die Anlage der Figur 1 gemäß dem Pfeil III;
- Figur 4: den Ausschnitt IV der Figur 3 im vergrößerten Maßstab;
- Figur 5: eine weitere Ausführungsform einer Anlage entsprechend der Darstellung der Figur 3;
- Figur 6: in vergrößertem Maßstab den Ausschnitt VI der Figur 5;
- Figur 7: eine dritte Ausführungsform einer Anlage entsprechend der Darstellung der Figur 3;
- Figur 8: den Ausschnitt VIII der Figur 7 in vergrößertem Maßstab;
- Figur 9: eine vierte Ausführungsform einer Anlage entsprechend der Darstellung der Figur 3;
- Figur 10: den Ausschnitt X der Figur 9 in vergrößertem Maßstab;
- Figur 11: in der Perspektive in vergrößertem Maßstab den Ausschnitt XI der Figur 3,
- Figur 12: in der Perspektive in vergrößertem Maßstab den Ausschnitt XII der Figur 7;
- Figur 13: in der Perspektive in vergrößertem Maßstab den Ausschnitt XIII der Figur 9 und
- Figur 14: in der Perspektive in vergrößertem Maßstab den Ausschnitt XIV der Figur 5.

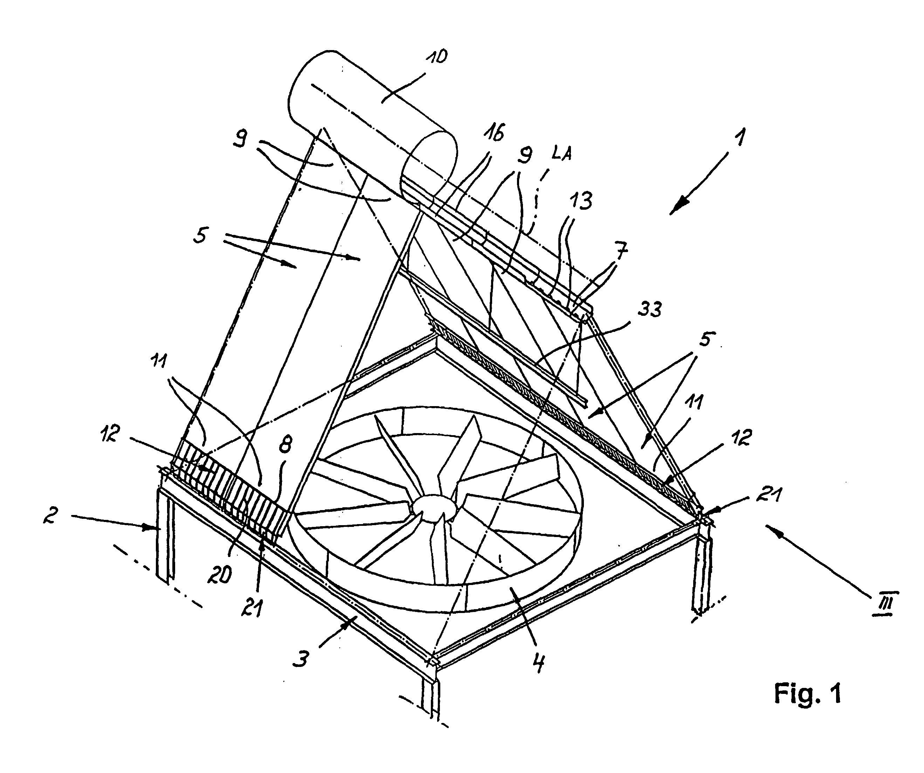

Mit 1 ist in der Figur 1 eine im Schema veranschaulichte Anlage zur Kondensation von Dampf bezeichnet. In der Regel werden mehrere solcher Anlagen 1 in Reihe hintereinander und parallel nebeneinander vorgesehen.

Die Anlage 1 umfasst eine aus mehreren vertikalen und horizontalen Stahlträgern bestehende Unterkonstruktion 2. Die Unterkonstruktion 2 weist eine Plattform 3 auf, in deren Höhenbereich ein Lüfter 4 vorgesehen ist.

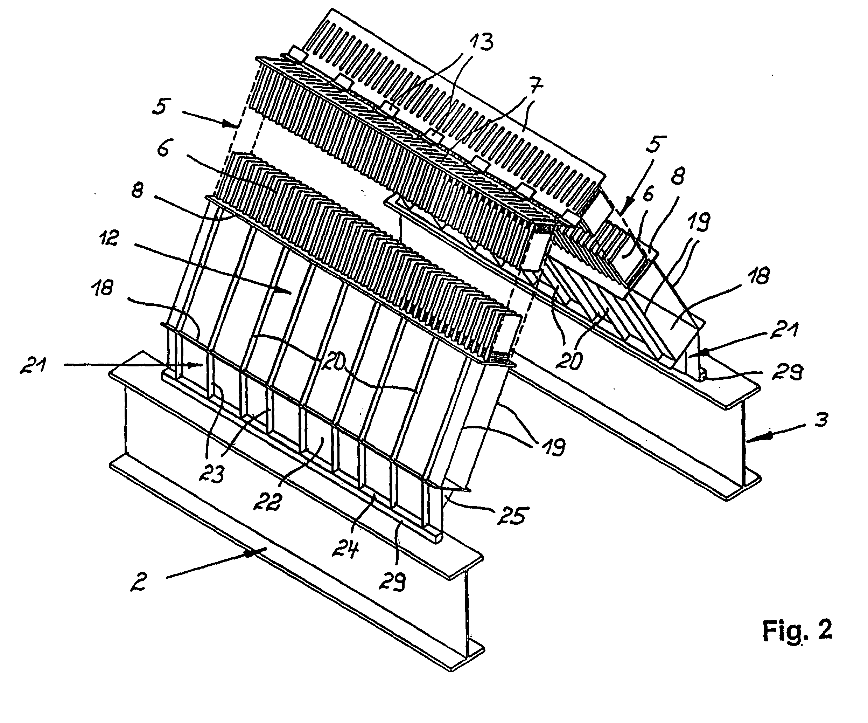

Oberhalb des Lüfters 4 sind in spitzdachförmiger Konfiguration angeordnete, selbsttragend ausgebildete Rohrbündel 5 rechteckigen Querschnitts vorgesehen. Die Rohrbündel 5 setzen sich aus aus den Figuren 2, 3, 5, 7 und 9 näher erkennbaren Rippenrohren 6 sowie oberen Rohrböden 7 und unteren Rohrböden 8 zusammen. Die Rohrbündel 5 sind fluidübertragend mit ihren oberen Enden 9 an eine firstseitige Dampfverteilleitung 10 und mit ihren unteren Enden 11 an Kondensatsammelleitungen 12 angeschlossen (Figur 1).

Wie eine gemeinsame Betrachtung der Figuren 1 bis 3 und 11 zu erkennen gibt, sind die Rohrbündel 5 über ihre oberen Rohrböden 7 durch mehrere Winkellaschen 13 miteinander verbunden. Die Schenkel 14 der Winkellaschen 13 sind an den oberen Rohrböden 7 durch Schraubmittel 15 befestigt. Die Abmessungen der Winkellaschen 13 sind so gewählt, dass sie die anfallenden Kräfte aus Wind, Schnee sowie Erdbeben und die Abstützung der Rohrbündel 5 gegeneinander übernehmen können, gleichzeitig aber weich genug ausgebildet sind, um die aus der Wärmedehnung der Rohrbündel 5 entstehende Winkelverdrehung im Bereich der oberen Rohrböden 7 zu ermöglichen.

An die äußeren Längskanten der oberen Rohrböden 7 sind zueinander parallele Distanzstege 16 geschweißt (Figuren 1, 3, 5, 7 und 9), die neben einem offenen unteren Umfangsbereich 17 der einen runden Querschnitt aufweisenden Dampfverteilleitung 10 außenseitig angeschweißt sind.

An die unteren Rohrböden 8 der Rohrbündel 5 der Ausführungsform der Figuren 1 - 3 sind die einen rechteckigen Querschnitt aufweisenden Kondensatsammelleitungen 12 geschweißt. Diese Kondensatsammelleitungen 12 werden demnach von den unteren Rohrböden 8, von Bodenblechen 18 und von Seitenblechen 19 begrenzt. Außenseitig sind die Seitenbleche 19 der Kondensatsammelleitungen 12 durch Vertikalrippen 20 versteift.

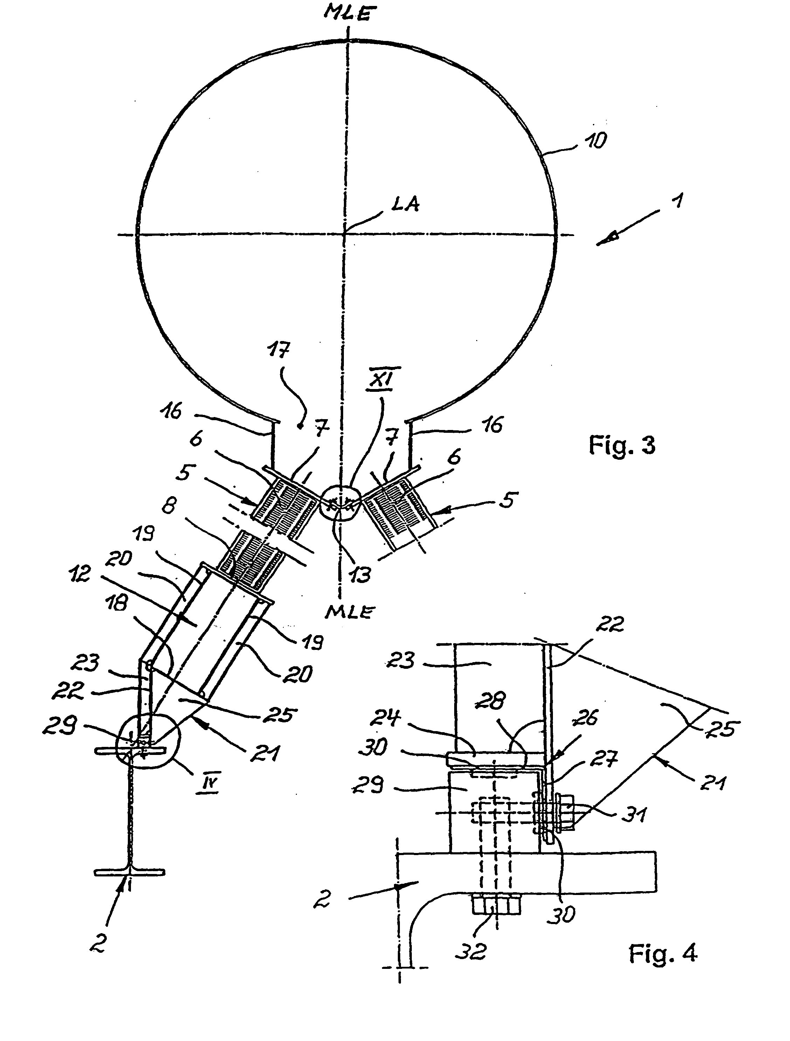

An die Bodenbleche 18 der Kondensatsammelleitungen 12 sind Stützfüße 21 geschweißt (Figuren 1 - 3). Diese Stützfüße 21 bestehen aus einem vertikalen Stegblech 22, außenseitigen Vertikalrippen 23, einer unteren Längsleiste 24 und inneren Versteifungsblechen 25 sowie aus einem Edelstahlwinkel 26 mit einem vertikalen Schenkel 27 und einem horizontalen Schenkel 28 (Figuren 2 - 4). Mit den Edelstahlwinkeln 26, die über die gesamte Länge der Stützfüße 21 durchgehen können oder nur bereichsweise vorgesehen sind, werden die Kondensatsammelleitungen 12 an im Querschnitt rechteckigen Gleitschienen 29 zwangsgeführt, die an der Unterkonstruktion 2 festgelegt sind. An den den Schenkeln 27, 28 der Edelstahlwinkel 26 zugewandten Seitenflächen der Gleitschienen 29 sind bereichsweise Gleitschichten 30 aus Polytetrafluorethylen vorgesehen (Figur 4). Außerdem lässt die Figur 4 noch erkennen, dass die Stützfüße 21 durch Schraubmittel 31 mit den Gleitschienen 29 verbunden sind. Diese Schraubmittel 31 erlauben zwar eine Relativbewegung der Stützfüße 21 zu den Gleitschienen 29, verhindern aber ein Abheben der Rohrbündel 5 von der Unterkonstruktion 2. Die Gleitschienen 29 sind über Schraubmittel 32 an der Unterkonstruktion 2 befestigt.

Aus der Figur 1 ist noch ersichtlich, dass unterhalb der Dampfverteilleitung 10 eine Tragschiene 33 vorgesehen ist, an welcher ein Kran entlang verfahren werden kann, mit welchem z.B. der Motor und das Getriebe des Lüfters 4 austauschbar sind.

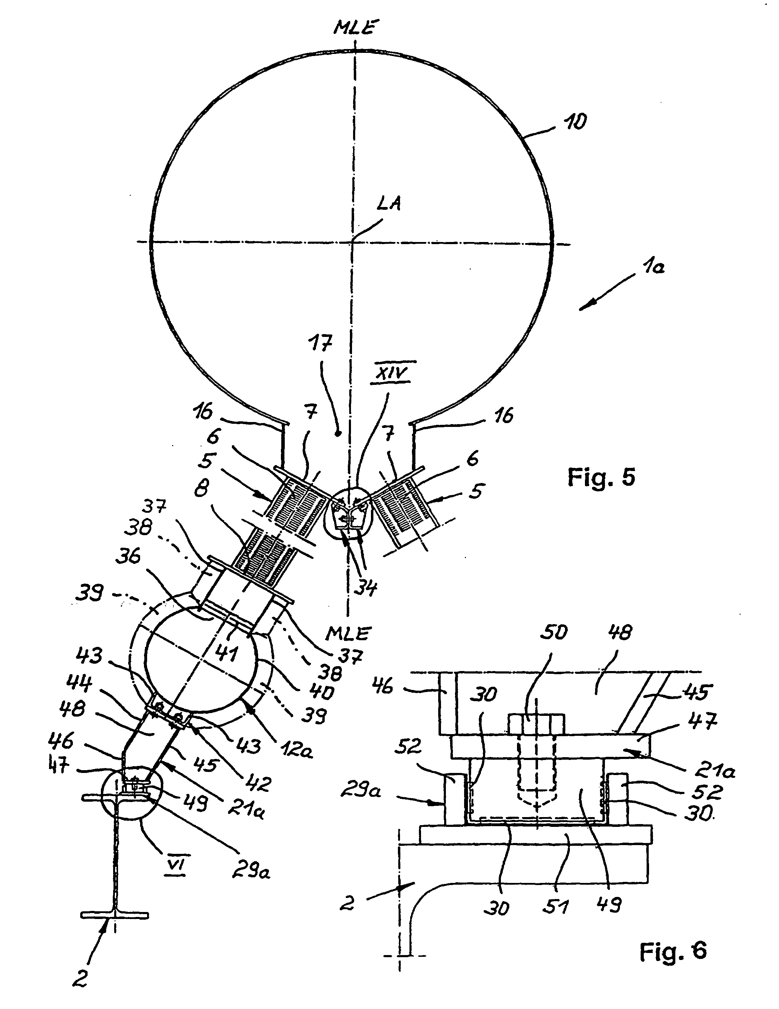

Die Ausführungsform der Anlage 1a gemäß den Figuren 5, 6 und 14 unterscheidet sich von derjenigen der Figuren 1 bis 4 und 11 in der Verbindung der oberen Rohrböden 7, der Querschnittsgestaltung der Kondensatsammelleitungen 12a und der Abstützung der Kondensatsammelleitungen 12a an der Unterkonstruktion 2.

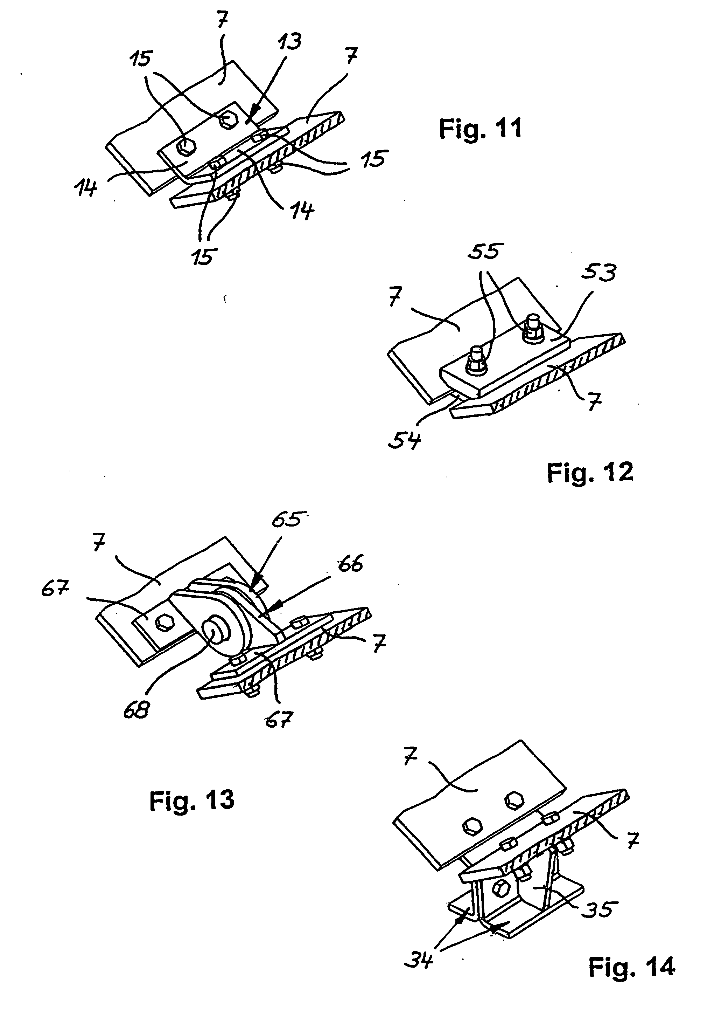

Die Verbindung der oberen Rohrböden 7 erfolgt durch unter die Rohrböden 7 geschraubte trapezförmige Profile 34 (Figur 14), die auch miteinander verschraubt sind. Diese Profile 34 sind durch Stege 35 ausgesteift. An die Profile 34 kann eine Kranschiene 33 gemäß Figur 1 gehängt werden.

Die unterhalb der Rohrbündel 5 vorgesehenen Kondensatsammelleitungen 12a besitzen einen runden Querschnitt (Figur 5). Rohrbündelseitig sind die Kondensatsammelleitungen 12a offen ausgebildet. Neben den offenen Umfangsbereichen 36 sind parallele Längsstege 37 außenseitig an die Kondensatsammelleitungen 12a geschweißt, die andererseits an die unteren Rohrböden 8 geschweißt sind. Sowohl die Längsstege 37 als auch die Kondensatsammelleitungen 12a sind durch außenseitige Rippen 38, 39 versteift.

Ferner ist noch zu erkennen, dass im Übergangsbereich von den Wandungen 40 der Kondensatsammelleitungen 12a auf die Längsstege 37 eine innere Querverrippung 41 vorgesehen ist.

An die den unteren Rohrböden 8 abgewandten Umfangsbereiche der Kondensatsammelleitungen 12a sind in Längsrichtung U-Eisen 42 mit ihren Schenkeln 43 geschweißt. Diese U-Eisen 42 wiederum sind an aus Längsblechen 44-46, Querstegen 48 und Bodenbleche 47 bestehenden Stützfüßen 21a geschraubt. Unterhalb der Stützfüße 21a sind mehrere in Längsrichtung verteilt angeordnete Führungskonsolen 49 mittels Schrauben 50 festgelegt. Die Führungskonsolen 49 bestehen aus Edelstahl. Sie fassen in nach oben offene U-förmige Gleitschienen 29a. Innenseitig der Gleitschienen 29a sind an den Böden 51 und an den Schenkeln 52 bereichsweise Gleitschichten 30 aus Polytetrafluorethylen vorgesehen. Die Gleitschienen 29a können der Unterkonstruktion 2 lösbar oder unlösbar zugeordnet sein.

Statt der in den Figuren 5 und 14 dargestellten Verbindung können die oberen Rohrböden 7 der Anlage 1a auch gemäß den Figuren 3 und 11 verbunden sein. Des Weiteren können die Kondensatsammelleitungen 12a so an der Unterkonstruktion 2 zwangsgeführt sein, wie es aus den Figuren 2 bis 4 erkennbar ist.

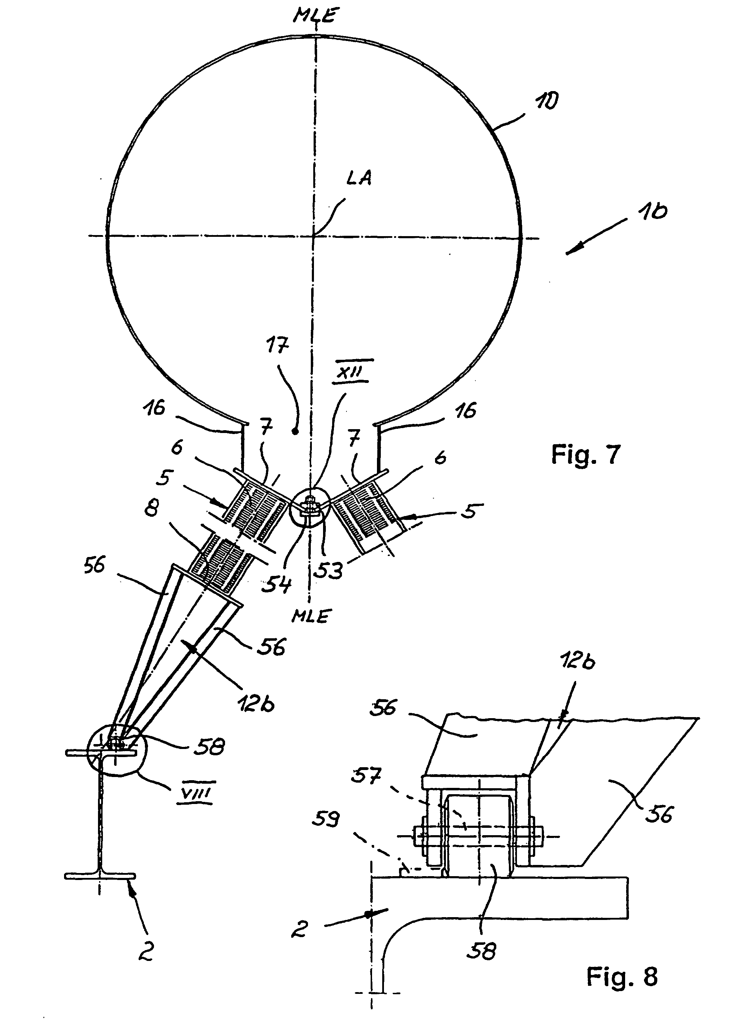

Im Umfang der Anlage 1b gemäß den Figuren 7, 8 und 12 sind die oberen Rohrböden 7 der Rohrbündel 5 durch diese über- und untergreifende, miteinander verschraubte Klemmlaschen 53, 54 gekoppelt. Die Schraubmittel sind mit 55 bezeichnet.

An die unteren Rohrböden 8 sind im Querschnitt dreieckförmige Kondensatsammelleitungen 12b geschweißt, die mit außenseitigen Vertikalrippen 56 versehen sind. An den unteren Enden der Kondensatsammelleitungen 12b sind um horizontale Achsen 57 drehbare Rollen 58 vorgesehen, die auf der Unterkonstruktion 2 abwälzen.

Wie in der Figur 8 in strichpunktierter Linienführung veranschaulicht, können die Rollen 58 gegen seitliche Anschlagleisten 59 anlaufen, um ein Aufspreizen der Rohrbündel 5 zu verhindern.

Auch die Ausführungsform der Anlage 1b gemäß Figur 7 kann die Verbindungen der oberen Rohrböden 7 gemäß den Figuren 3 und 5 aufweisen. Ferner können die dreieckförmigen Kondensatsammelleitungen 12b entsprechend den Ausführungsformen der Figuren 3 und 5 an der Unterkonstruktion 2 abgestützt sein.

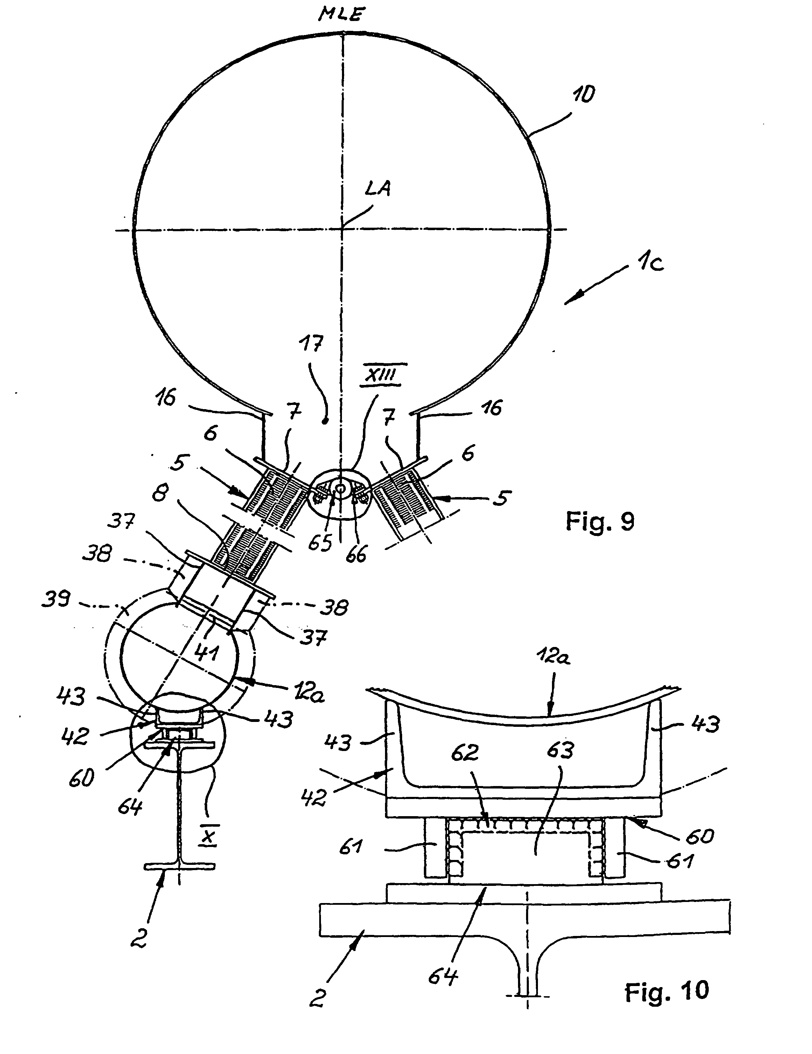

Die Anlage 1c gemäß den Figuren 9, 10 und 13 sieht ebenfalls im Querschnitt runde Kondensatsammelleitungen 12a vor, die über Längsstege 37 zu den unteren Rohrböden 8 distanziert und innenseitig durch Querverrippungen 41 ausgesteift sind. Außenseitig sind sowohl die Längsstege 37 als auch die Kondensatsammelleitungen 12a durch Rippen 38, 39 versteift. Die Kondensatsammelleitungen 12a sind an die Schenkel 43 von U-Eisen 42 geschweißt. Diese sind wiederum an U-Profile 60 geschweißt, welche mit ihren Schenkeln 61 vielkugellager 62 übergreifen, die an Vertikalstegen 63 von T-förmigen Basisschienen 64 vorgesehen sind. Die Basisschienen 64 sind lösbar oder unlösbar auf der Unterkonstruktion 2 befestigt.

Die oberen Rohrböden 7 sind gemäß den Figuren 9 und 13 über Gelenklaschen 65, 66 miteinander verbunden. Zu diesem Zweck ist eine Doppellasche 65 vorgesehen, die über ein Tragblech 67 mit dem einen Rohrboden 7 verschraubt ist. Zwischen die Doppellasche 65 fasst eine Einfachlasche 66, die ebenfalls über ein Tragblech 67 mit dem anderen Rohrboden 7 verschraubt ist. Die Doppellasche 65 und die Einfachlasche 66 sind über einen Schwenkbolzen 68 miteinander gekoppelt.

Auch bezüglich der Ausführungsform der Figuren 9, 10 und 13 gilt, dass diese mit den diversen Gestaltungsmöglichkeiten entsprechend den Ausführungsformen der Figuren 3 bis 8 variiert bzw. kombiniert werden kann.

### Bezugszeichenaufstellung

- 1 -: Anlage
1a - Anlage
1b - Anlage
1c - Anlage
- 2 -: Unterkonstruktion von 1, 1a, 1b, 1c
- 3 -: Plattform von 2
- 4 -: Lüfter auf 3
- 5 -: Rohrbündel
- 6 -: Rippenrohre von 5
- 7 -: obere Rohrböden von 5
- 8 -: untere Rohrböden von 5
- 9 -: obere Enden von 5
- 10 -: Dampfverteilleitung
- 11 -: untere Enden von 5
- 12 -: Kondensatsammelleitungen
12a - Kondensatsammelleitungen
12b - Kondensatsammelleitungen
- 13 -: Winkellaschen
- 14 -: Schenkel von 13
- 15 -: Schraubmittel
- 16 -: Distanzstege
- 17 -: Umfangsbereich von 10
- 18 -: Bodenbleche von 12
- 19 -: Seitenbleche von 12
- 20 -: Vertikalrippen an 19
- 21 -: Stützfüße
21a - Stützfüße
- 22 -: Stegblech von 21
- 23 -: Vertikalrippen
- 24 -: Längsleiste
- 25 -: Versteifungsbleche
- 26 -: Edelstahlwinkel
- 27 -: vertikale Schenkel von 26
- 28 -: horizontale Schenkel von 26
- 29 -: Gleitschienen
29a - Gleitschienen
- 30 -: Gleitschichten an 29, 29a
- 31 -: Schraubmittel
- 32 -: Schraubmittel
- 33 -: Tragschiene
- 34 -: trapezförmige Profile
- 35 -: Stege an 34
- 36 -: offene Umfangsbereiche von 12a
- 37 -: Längsstege zwischen 12a und 8
- 38 -: Rippen an 37
- 39 -: Rippen an 12a
- 40 -: Wandungen von 12a
- 41 -: Querverrippung
- 42 -: U-Eisen (Stützfüße)
- 43 -: Schenkel von 42
- 44 -: Längsbleche
- 45 -: Längsbleche
- 46 -: Längsbleche
- 47 -: Bodenbleche
- 48 -: Querstege
- 49 -: Führungskonsolen
- 50 -: Schrauben
- 51 -: Böden von 29a
- 52 -: Schenkel von 29 a
- 53 -: obere Klemmlasche
- 54 -: untere Klemmlasche
- 55 -: Schraubmittel
- 56 -: Vertikalrippen
- 57 -: Achsen von 58
- 58 -: Rollen
- 59 -: Anschlagleisten
- 60 -: U-Profile
- 61 -: Schenkel von 60
- 62 -: Vielkugellager
- 63 -: Vertikalstege von 64
- 64 -: Basisschienen
- 65 -: Doppellasche
- 66 -: Einfachlasche
- 67 -: Tragbleche
- 68 -: Schwenkbolzen

- LA -: Längsachse von 10
- MLE -: vertikale Mittellängsebene durch LA

## Patentansprüche

1. Anlage zur Kondensation von Dampf, welche im Abstand vom Erdboden mehrere von einer Unterkonstruktion (2) abgefangene, oberhalb eines Lüfters (4) in A- bzw. spitzdachförmiger Konfiguration angeordnete, selbsttragend ausgebildete Rohrbündel (5) aufweist, die fluidübertragend mit ihren oberen Enden (9) an eine firstseitige Dampfverteilleitung (10) und mit ihren unteren Enden (11) an eine Kondensatsammelleitung (12, 12a, 12b) angeschlossen sind, wobei die bezüglich der durch die Längsachse (LA) der Dampfverteilleitung (10) verlaufenden vertikalen Mittellängsebene (MLE) einander gegenüberliegenden Rohrbündel (5) sich über ihre oberen Rohrböden (7) begrenzt schwenkgelenkig aneinander abstützen und die Kondensatsammelleitungen (12, 12a, 12b) unterhalb der unteren Rohrböden (8) an diese angesetzt sowie parallel zur Mittellängsebene (MLE) relativ verlagerbar auf der Unterkonstruktion (2) positioniert sind.

2. Anlage nach Anspruch 1, bei welcher die oberen Rohrböden (7) über Winkellaschen (13) miteinander verbunden sind.

3. Anlage nach Anspruch 1, bei welcher die oberen Rohrböden (7) durch diese über- und untergreifende, miteinander verschraubte Klemmlaschen (53, 54) gekoppelt sind.

4. Anlage nach Anspruch 1, bei welcher die oberen Rohrböden (7) über Gelenklaschen (65, 66) miteinander verbunden sind.

5. Anlage nach Anspruch 1, bei welcher die oberen Rohrböden (7) durch unter diesen befestigte sowie miteinander verbundene, mittels Stegen (35) ausgesteifte U-förmige Profile (34) aneinander gekoppelt sind.

6. Anlage nach einem der Ansprüche 1 bis 5, bei welcher die einen runden Querschnitt aufweisende Dampfverteilleitung (10) im unteren Umfangsbereich (17) offen ausgebildet und über neben dem offenen Umfangsbereich (17) liegende parallele Distanzstege (16) an den oberen Rohrböden (7) befestigt ist.

7. Anlage nach einem der Ansprüche 1 bis 6, bei welcher die Kondensatsammelleitungen (12) einen rechteckigen Querschnitt aufweisen und außenseitig durch Vertikalrippen (20) versteift sind.

8. Anlage nach einem der Ansprüche 1 bis 6, bei welcher die Kondensatsammelleitungen (12b) einen dreieckigen Querschnitt aufweisen und außenseitig durch Vertikalrippen (56) versteift sind.

9. Anlage nach einem der Ansprüche 1 bis 6, bei welcher die Kondensatsammelleitungen (12a) einen runden Querschnitt aufweisen, rohrbündelseitig offen ausgebildet und durch parallele Längsstege (37) zu den unteren Rohrböden (8) distanziert sind, wobei sowohl die Kondensatsammelleitungen (12a) als auch die Längsstege (37) außenseitig durch Rippen (39, 38) versteift sind.

10. Anlage nach einem der Ansprüche 1 bis 9, bei welcher die Kondensatsammelleitungen (12, 12a, 12b) direkt oder über Stützfüße (21, 21a, 42) an auf der Unterkonstruktion (2) befestigten Gleitschienen (29, 29a) zwangsgeführt sind.

11. Anlage nach Anspruch 10, bei welcher die Stützfüße (21, 21a) über hochglanzpolierte Edelstahlwinkel (26) an den bereichsweise mit Gleitschichten (30) aus Polytetrafluorethylen versehenen, einen rechteckigen Querschnitt aufweisenden Gleitschienen (29) zwangsgeführt sind.

12. Anlage nach Anspruch 10 oder 11, bei welcher die Stützfüße (21, 21a) durch eine begrenzte Relativverlagerung zulassende Schraubverbindungen (31) an den Gleitschienen (29) festgelegt sind.

13. Anlage nach Anspruch 10, bei welcher die Stützfüße (21, 21a) über Führungskonsolen (49) in nach oben offenen, bereichsweise mit Gleitschichten (30) aus Polytetrafluorethylen versehenen U-förmigen Gleitschienen (29a) zwangsgeführt sind.

14. Anlage nach einem der Ansprüche 1 bis 9, bei welcher die Kondensatsammelleitungen (12, 12a, 12b) direkt oder über Stützfüße (21, 21a, 42) rollend auf der Unterkonstruktion (2) gelagert sind.

15. Anlage nach Anspruch 14, bei welcher die Kondensatsammelleitungen (12, 12a, 12b) über an den Stützfüßen (21, 21a, 42) vorgesehene Rollen (58) auf der Unterkonstruktion (2) abwälzen.

16. Anlage nach Anspruch 14, bei welcher die Kondensatsammelleitungen (12, 12a, 12b) über Vielkugellager (62) an der Unterkonstruktion (2) abgestützt sind.

## Claims

1. An installation for the condensation of vapour, which at a distance from the ground comprises a plurality of tube nests (5) held by a substructure (2) and disposed above a fan (4) in an A or pointed roof shaped configuration, said nests being of self-supporting construction and being connected in fluid-transmitting relationship by their upper ends (9) to a vapour distribution conduit (10) adjacent the ridge while their lower ends (11) are connected to a condensate collecting conduit (12, 12a, 12b), wherein the tube nests (5) which are situated opposite one another with respect to the vertical central longitudinal plane (MLE) extending through the longitudinal axis (LA) of the vapour distribution conduit (10) bear against one another by their upper tube bases (7) so as to have limited articulation movement and the condensate collecting conduits (12, 12a, 12b) are attached to the lower tube bases (8) beneath the latter and are positioned on the substructure (2) so as to be relatively movable parallel to the central longitudinal plane (MLE).

2. An installation according to claim 1, wherein the upper tube bases (7) are interconnected via brackets (13).

3. An installation according to claim 1, wherein the upper tube bases (7) are coupled by clamping plates (53, 54) which engage above and beneath the upper tube bases and are screwed together.

4. An installation according to claim 1, wherein the upper tube bases (7) are interconnected via articulated plates (65, 66).

5. An installation according to claim 1, wherein the upper tube bases (7) are coupled together by interconnected U-shaped profiles (34) which are fixed beneath the upper tube bases (7) and stiffened by means of webs (35).

6. An installation according to any one of claims 1 to 5, wherein the vapour distribution conduit (10) having a round cross-section is open in the bottom peripheral zone (17) and is fixed on the upper tube bases (7) by means of parallel spacer webs (16) situated next to the open peripheral zone (17).

7. An installation according to any one of claims 1 to 6, wherein the condensate collecting conduits (12) have a rectangular cross-section and are stiffened on the outside by vertical ribs (20).

8. An installation according to any one of claims 1 to 6, wherein the condensate collecting conduits (12b) have a triangular cross-section and are stiffened on the outside by vertical ribs (56).

9. An installation according to any one of claims 1 to 6, wherein the condensate collecting conduits (12a) have a round cross-section, are open on the tube nest side, and are spaced from the lower tube bases (8) by parallel longitudinal webs (37), both the condensate collecting conduits (12a) and the longitudinal webs (37) being stiffened on the outside by ribs (39, 38).

10. An installation according to any one of claims 1 to 9, wherein the condensate collecting conduits (12, 12a, 12b) are restrained directly or by way of support feet (21, 21a, 42) on guide rails (29, 29a) fixed on the substructure (2).

11. An installation according to claim 10, wherein the support feet (21, 21a) are restrained by means of high-gloss polished refined steel brackets (26), on the guide rails (29) which in zones are provided with antifriction coatings (30) of polytetrafluoroethylene and which have a rectangular cross-section.

12. An installation according to claim 10 or 11, wherein the support feet (21, 21a) are fixed on the guide rails (29) by screw connections (31) allowing a limited relative displacement.

13. An installation according to claim 10, wherein the support feet (21, 21a) are restrained by guide brackets (49) in upwardly open U-shaped guide rails (29a) which in zones are provided with antifriction coatings (30) of polytetrafluoroethylene.

14. An installation according to any one of claims 1 to 9, wherein the condensate collecting conduits (12, 12a, 12b) are mounted to roll on the substructure (2) directly or via support feet (21, 21a, 42).

15. An installation according to claim 14, wherein the condensate collecting conduits (12, 12a, 12b) roll on the substructure (2) by means of rollers (58) provided on the support feet (21, 21a, 42).

16. An installation according to claim 14, wherein the condensate collecting conduits (12, 12a, 12b) are supported on the substructure (2) via multi-ball bearings (62).

## Revendications

1. Installation de condensation de vapeur, qui comporte plusieurs faisceaux de tubes (5) agencés de manière à être autoporteurs, supportés par une construction sous-jacente (2), disposés au-dessus d'un ventilateur (4) dans la configuration en forme de A ou en forme de toit pointu et qui sont raccordés, de manière à transmettre un fluide, par leurs extrémités supérieures (9) à une canalisation de distribution de vapeur (10) située du côté du faîte et par leurs extrémités inférieures (11) à une canalisation (12, 12a, 12b) de collecte du condensat, et dans laquelle les faisceaux de tubes (5) qui sont opposés entre eux par rapport au plan médian longitudinal vertical (MLE) passant par l'axe longitudinal (LA) de la canalisation de distribution de vapeur (10) prennent appui les uns sur les autres, par l'intermédiaire des fonds supérieurs (7) de leurs tubes, de manière articulée de manière à pouvoir pivoter de façon limitée, et les canalisations (12, 12a, 12b) de collecte du condensat sont montées au-dessous des fonds inférieurs (8) des tubes, sur ces fonds et sont positionnées sur la construction sous-jacente (2) de manière à être déplaçables de façon relative par rapport au plan médian longitudinal (MLE).

2. Installation selon la revendication 1, dans laquelle les bases supérieures (7) des tubes sont reliées entre eux par l'intermédiaire de pattes coudées (13).

3. Installation selon la revendication 1, dans laquelle les fonds supérieurs (7) des tubes sont couplés par des pattes de serrage (53, 54) qui s'engagent au-dessus et au-dessous de ces fonds et sont vissées entre elles.

4. Installation selon la revendication 1, dans laquelle les fonds supérieurs (7) des tubes sont reliés entre eux au moyen de pattes articulées (65, 66).

5. Installation selon la revendication 1, dans laquelle les fonds supérieurs (7) des tubes sont couplés entre eux par des profilés en forme de U (34), qui sont fixés au-dessous de ces fonds, sont reliés entre eux et sont rigidifiés au moyen de barrettes (35).

6. Installation selon l'une des revendications 1 à 5, dans laquelle la canalisation de distribution de vapeur (10), qui possède une section transversale circulaire, est ouverte dans la zone périphérique inférieure (17) et est fixée aux fonds supérieurs (7) des tubes par l'intermédiaire de barrettes d'entretoisement parallèles (16) qui sont situées à côté de la zone périphérique ouverte (17).

7. Installation selon l'une des revendications 1 à 6, dans laquelle les canalisations (12) de collecte du condensat possèdent une section transversale rectangulaire et sont rigidifiées extérieurement par des nervures verticales (20).

8. Installation selon l'une des revendications 1 à 6, dans laquelle les canalisations (12) de collecte du condensat possèdent une section transversale de forme triangulaire et sont rigidifiées extérieurement par des nervures verticales (56).

9. Installation selon l'une des revendications 1 à 6, dans laquelle les canalisations (12a) de collecte du condensat possèdent une section transversale circulaire, ouverte du côté des faisceaux de tubes et sont séparées des bases inférieures (8) des tubes par des barrettes longitudinales parallèles (37), aussi bien les canalisations (12a) de collecte du condensat que les barrettes longitudinales (37) sont rigidifiées extérieurement par des nervures (39, 38).

10. Installation selon l'une des revendications 1 à 9, dans laquelle les canalisations (12, 12a, 12b) de collecte du condensat sont guidées de façon forcée directement ou par l'intermédiaire de pieds d'appui (21, 21a, 42) sur des glissières (29, 29a) fixées sur la construction sous-jacente (2).

11. Installation selon la revendication 10, dans laquelle les pieds d'appui (21, 21a) sont guidés d'une manière forcée par l'intermédiaire de cornières en acier spécial (26) polies avec un poli spéculaire, sur les glissières (29) qui sont pourvues par endroits de couches de glissement (30) formées de polytétrafluoroéthylène et possèdent une section transversale rectangulaire.

12. Installation selon la revendication 10 ou 11, dans laquelle les pieds d'appui (21, 21a) sont fixés sur les glissières (29) par des liaisons vissées (31) possédant un décalage relatif limité.

13. Installation selon la revendication 10, dans laquelle les pieds d'appui (21, 21a) sont guidés de façon forcée, par l'intermédiaire de consoles de guidage (49), dans des glissières en forme de U (29a), qui sont ouvertes vers le haut et sont pourvues par endroits de couches de glissement (30) formées de polytétrafluoréthylène.

14. Installation selon l'une des revendications 1 à 9, dans laquelle les canalisations (12, 12a, 12b) de collecte du condensat sont montées directement ou par l'intermédiaire de pieds d'appui (21, 21a, 42) de manière à rouler sur la construction sous-jacente (2).

15. Installation selon la revendication 14, dans laquelle les canalisations (12, 12a, 12b) de collecte du condensat roulent sur la construction sous-jacente (2) au moyen de galets (58) prévus sur les pieds d'appui (21, 21a, 42).

16. Installation selon la revendication 14, dans laquelle les canalisations (12, 12a, 12b) de collecte du condensat sont supportées par la construction sous-jacente (2) au moyen de paliers (62) à billes multiples.
